# EUROPÄISCHE PATENTSCHRIFT

(11) **EP 1 379 417 B1**
(45) Veröffentlichungstag und Bekanntmachung des Hinweises auf die Patenterteilung: **07.07.2004**
(21) Anmeldenummer: 01997425.2
(22) Anmeldetag: 21.11.2001
(51) Int. Cl.: B60T 7/10, B60T 7/04

(54) **FESTSTELLBREMSE**
PARKING BRAKE
FREIN A MAIN

(30) Priorität: 21.11.2000 DE 10057909; 15.05.2001 DE 10123525
(43) Veröffentlichungstag der Anmeldung: 14.01.2004
(73) Patentinhaber: Edscha Betätigungssysteme GmbH, 94491 Hengersberg (DE)
(72) Erfinder: BÖHM, Markus, 42857 Remscheid (DE); BRAKER, Ulf, 13158 Berlin (DE); LORENZ, Michael, 4780 Schärding (AT); BALZ, Jürgen, 65510 Hünstetten (DE)
(74) Vertreter: Sparing, Rolf Klaus
(86) Internationale Anmeldenummer: PCT/DE2001/004330
(87) Internationale Veröffentlichungsnummer: WO 2002/042131

(56) Entgegenhaltungen:
- EP-A- 0 432 954
- DE-A- 3 529 696
- FR-A- 2 748 438
- FR-A- 2 753 947
- GB-A- 665 797
- GB-A- 2 188 712
- US-A- 2 716 902
- US-A- 5 448 928
- US-A- 6 079 794

## Beschreibung

Die Erfindung betrifft eine Feststellbremse nach dem Oberbegriff des Anspruchs 1 bzw. 2 bzw 8.

Aus der Praxis sind Feststellbremsen, insbesondere Fußfeststellbremsen für Kraftfahrzeuge, bekannt, welche bei Betätigung eines beispielsweise mit einem Pedal ausgestalteten Bremsbetätigungshebels einen entsprechenden Zug auf ein die Bremsbacken der Feststellbremse anziehendes Bremsseil ausüben und diese auf solche Weise spannt. Nachteilig bei diesen Feststellbremsen ist die Tatsache, daß der Hebelarm des Pedals einerseits und der Abstand der Anlenkung des Bremsseils von dem karosseriefesten Anlenkpunkt des Bremsbetätigungshebels andererseits ungünstige Hebelverhältnisse (etwa 1 zu 2) definiert, so daß in der Praxis zwischen einem ersten und einem zweiten Teil des Bemsseils Spannglieder eingebaut werden müssen, die eine Übersetzung um das etwa vierfache des auf sie ausgeübten Zugs bewirken. Solche Spannglieder sind problematisch, weil in der Regel die Nachstellung des Bremsseils aufgrund des Verschleißes der Bremsbeläge nur an einem Teil des Bremsseils möglich ist und diese damit schlecht ausgleichbar ist. Zudem erschweren diese Teile den Einbau des Bremsseils, weil dieses nur im Abstand hierzu geführt sein kann und verteuern somit die Montage. Zudem bildet ein solches Spannglied stets eine Schwachstelle für Material- und Montagefehler.

US 2,716,902 zeigt eine Feststellbremse für ein Fahrzeug, die als Stockbremse ausgebildet ist, bestehend aus einem stockförmigen Bremskontrollhebel und einem Halter mit einer Öffnung, durch die der stockförmige Bremskontrollhebel hindurch geführt und verschiebbar ist. An einem Ende des Bremskontrollhebels ist ein Hebel schwenkbar gelagert, der an einer weiteren Anlenkung an dem Halter gelagert ist. Der Hebel weist ein Langloch auf, in dem ein U-förmiger Zughaken zum Anbinden des Bremsseils mittels einer Lagerbuchse gelagert ist. Die Lagerbuchse ist zusätzlich in einem gekrümmten Langloch des Halters gelagert. Beim Betätigen des Bremskontrollhebels verschwenkt der Hebel um die Anlenkung. Aufgrund des Schwenkkreises des Hebels führt der Bremskontroll eine zusätzliche Bewegung vertikal zu seiner Betätigungsrichtung aus. An dem Bremskontrollhebel ist eine Verzahnung angeordnet, so dass mittels eines Klinkenelements der Hebel in bevorzugten, durch die Verzahnung definierte, Feststellpositionen gehalten wird. Eine Auslöseeinrichtung ist derart vorgesehen, dass eine Drehbewegung des Handgriffs um eine im wesentlichen axiale Achse des Zugstocks die Verzahnung aus den Klinkenelementen löst.

EP 0 432 954 A2 zeigt eine fußbetätigbare Feststellbremse für ein Fahrzeug, bei der ein Betätigen eines Füßpedals mittels eines Zugseils über eine Übersetzungseinheit auf zwei Bremsseile übertragen wird. Die Übersetzungseinheit umfasst ein mit dem Zugseil verbundenes Segment einer Seilscheibe, das an einer Anlenkung schwenkbar an einem Karosserieteil vorgesehen ist, wobei das Zugseil in einer Nut umfangsmäßig an dem Segment geführt ist. An der Anlenkung ist ferner ein erster Hebel schwenkbar gelagert, der mit einem zweiten Hebel schwenkkbar verbunden ist, wobei die Anlenkung der ersten Hebels mit dem zweiten Hebel mittels eines Federelements mit einer Kraft beaufschlagt ist. Der zweite Hebel ist andersseitig mit einem schwenkbar an dem Karosserieteil angeordneten Plattenkörper schwenkbar verbunden, wobei die Anlenkung innerhalb eines in der Seilscheibe vorgesehenen Langlochs geführt ist. An dem Plattenkörper sind zwei Ankoppelungseinheiten für die zwei Bremsseile angeordnet. Ferner ist an dem Platten körper eine Feststelleinrichtung, die eine gekrümmt verlaufende Außenverzahnung und eine Klinke aufweist, wobei die Klinke mittels einer Feder in die Außenverzahnung festlegbar ist.

GB 665,797 zeigt eine Feststellbremse für ein Fahrzeug, bestehend aus einem Handgriff , an dem ein Stock festliegt, der durch ein Führungselement an der Karosserie geführt ist. An dem Stock ist eine Verzahnung vorgesehen, die zusammen mit einem Klinkenelement eine Feststelleinrichtung bildet. Am Handgriff abgewandten Ende des Stocks ist mittels einer Anlenkung ein Lenkarm angebunden, der wiederum mittels einer weiteren Anlenkung mit einem kurzen Lenker verbunden ist. Der kurze Lenker ist mit einer Ankopplung für ein Bremsseil gekoppelt.

FR 2 748 438 A1 zeigt eine Feststellbremse für ein Fahrzeug mit einem Handgriff, der an einem Stab festgelegt ist. Der Stab ist mittels eines gradlinigen an der Karosserie festgelegten Elements geführt und axial verschiebbar. Am Ende des Stabs ist ein Fortsatz angeordnet, der an einer Achse mit einem Lenker verbunden ist. Der Lenker ist um eine bezüglich der Karosserie festen Achse schwenkbar. Die Achse teilt den Lenker in einen oberen Arm und in einen kürzeren unteren Arm. Am unteren Arm ist eine Ankopplung für ein Bremsseil angeordnet. Im Bereich der Achse weist der Lenker eine runde Ausformung auf, die an einer Seite mit einer Verzahnung versehen ist. In die Verzahnung greift eine Klinke, die an einem karosseriefesten Halter angebracht ist. Mittels eines am Handgriff angeordneten Knopfes kann die Klinke aus der Verzahnung gelöst werden.

FR 2 753 947 A1 zeigt eine Feststellbremse für ein Fahrzeug mit einem krummlinigen, bezüglich eines karosseriefesten ebenfalls krummlinigen Elements, verschiebbaren Element, an dem ein Handgriff angeordnet ist. Am anderen Ende des verschiebbaren Elements ist eine Rolle festgelegt, die bezüglich ihres Mantels mit einem Lenker in Kontakt steht, und bei Betätigen der Bremse wird die Rolle bezüglich des Lenkers abgerollt. Der Lenker ist um eine bezüglich der Karosserie festen Achse schwenkbar. Die Achse teilt den Lenker in einen oberen Arm und in einen unteren Arm. Am unteren Arm ist eine

Ankopplung für ein Bremsseil angeordnet. Im Bereich der Achse weist der Lenker eine halbkreisförmige Ausformung auf, die mit einer Verzahnung versehen ist. In die Verzahnung greift eine Klinke, die an einem karosseriefesten Halter angebracht ist. Mittels eines am Handgriff angeordneten Knopfes kann die Klinke aus der Verzahnung gelöst werden.

DE 35 29 696 A1 zeigt eine Feststellbremse für ein Fahrzeug, die als eine Stockbremse ausgebildet ist, bestehend aus einem Zugstock, der in axialer Richtung verschiebbar ist. An dem Zugstock ist ein Zahnstangenteil angeordnet, das mit einem Zahnradgetriebe kämmend in Eingriff steht. An dem Zahnradgetriebe ist ein Aufwickelglied angeordnet, das eine Ankopplungseinheit für ein Bremsseil aufweist. In das Zahnstangenteil greift zusätzlich eine an einem Gehäuse festgelegte Sperrklinke ein, welche mittels einer am Zugstock angeordneten Entriegeltaste gelöst werden kann.

Es ist die Aufgabe der Erfindung eine Feststellbremse nach Oberbegriff das Anspruchs 1 bzw. 2 bzw. 8 zu schaffen, die in kleinbauender Weise eine Zugkraft auf einen Griff in ein Spannen des Bremsseils übersetzt.

Diese Aufgabe wird bei der eingangs genannten Feststellbremse erfindungsgemäß mit kennzeichnenden Merkmalen des Anspruchs 1 bzw. 2 bzw. 8 gelöst.

Die erfindungsgemäße Feststellbremse benötigt wenig Platz im Bereich der Mittelkonsole zwischen Fahrersitz und Beifahrersitz und ermöglicht somit eine Mehrzahl von neuen Möglichkeiten zum Nutzen des Raumgewinns, z.B. für einen Cup-holder.

Die erfindungsgemäße Feststellbremse ermöglicht es, das Bremsseil mit einer Zugbewegung des Handgriffs zu koppeln, ohne daß die Last des Bremsseils von dem Fahrer unverändert überwunden werden muß. Vielmehr übersetzt die erfindungsgemäße Feststellbremse den Weg des ausziehbaren Handgriffs zu dem weg des Bremsseils, indem der Handgriff mehrere Zentimeter aus seiner Führung herausgezogen werden kann. Es ist möglich, die Zugkraft motorisch oder durch Federn zu unterstützen.

Durch die Ausgestaltung der erfindungsgemäßen Feststellbremse kann der im Fahrgastraum zwischen den vorderen Sitzen vorzusehende Teil einer Handbremse sehr kurz ausgestaltet werden, indem z.B. nur der Handgriff sichtbar ist und der weitere Bereich durch Armlehnen oder dgl. genutzt wird.

Die erfindungsgemäße Feststellbremse schafft ein günstiges Übersetzungsverhältnis durch das Vorsehen einer Übersetzungseinheit, die die axiale Bewegung des Handgriffs in eine andere axiale Zuspannung des Bremsseils umsetzt.

Die Übersetzungseinheit ist beispielsweise durch ein Zahnrad- oder Reibradgetriebe definiert, über das ein Hebel betätigt wird, an dem die Ankoppelungseinheit angeordnet ist. Alternativ kann auch eine Mehrgelenkkinematik für denselben Zweck vorgesehen werden, die einen Hebel, an dem die Ankoppelungseinheit angelenkt ist und der um ein Schwenkgelenk relativ zum Halter verschwenkbar ist, wobei über einen Steuerlenker eine Kraft auf den der Ankoppelungseinheit abgewandten Schenkel des Hebels aufgebracht wird. Vorzugsweise sind vier Gelenke auf diese Weise hintereinandergeschaltet.

Vorzugsweise ist im Bereich des Halters ein Trägerteil vorgesehen, der eine Anlenkung für eine Seilscheibe oder wenigstens einen Abschnitt oder ein Segment einer Seilscheibe aufweist. Ein Zugseil ist umfangsmäßig von der Seilscheibe geführt. Das Zugseil ist mit einem Ende an der Seilscheibe und mit seinem anderen Ende an den Handgriff derart gekoppelt, daß das Zugseil bei Verlagerung des Handgriffs ebenfalls gezogen wird. Da das Zugseil vorzugsweise keine Längenanderung ausführt und beispielsweise aus Metall hergestellt ist, wird die Seilscheibe bei Anziehen des Handgriffs um die Anlenkung verschwenkt.

An die Seilscheibe ist unmittelbar oder mittelbar das Bremsseil gekoppelt, wobei zur Erzielung einer Übersetzung vorzugsweise der Abstand der Anlenkung des Bremsseils zur Anlenkung der Seilscheibe kleiner ist als der Radius, auf dem das Zugseil umgelegt ist.

Gemäß einer ersten bevorzugten Weiterbildung der Erfindung ist das Bremsseil starr mit der Seilscheibe gekoppelt. Um den kleineren Radius gegenüber dem Radius der Seilscheibe zu der Anlenkung zu bewerkstelligen, kann das Bremsseil über eine Umlenkrolle, zweite Seilscheibe, ein Gleitstück oder dergleichen zu einer Bremsseilanlenkung hingeführt werden.

Gemäß einer weiteren bevorzugten Weiterbildung der Erfindung ist ein Lenker an die Seilscheibe gekoppelt, dessen anderes Ende sich an dem Trägerteil abstützt und insbesondere an dem Trägerteil gelagert sein kann, wobei eine von dem Lenker abstehender Schenkel, der kürzer ist als die Länge des Lenkers, von der Abstützung an dem Trägerteil absteht und die Anlenkung für das Bremsseil aufweist. Durch diese Ausgestaltung werden besonders günstige, insbesondere auch progressive Hebelverhältnisse beim Betätigen des Feststellbremse erzielt.

Gemäß noch einer weiteren bevorzugten Weiterbildung der Erfindung kann das Bremsseil über eine Mehrzahl von Lenkern und Hebeln verschwenkt werden, wobei über eine Mehrzahl aneinander gekoppelter Lenker eine mit einem der Lenker gekoppelte Ankoppelungseinheit für das Bremsseil um eine Anlenkung gleichzeitig mit der Verlagerung des Handgriffs verschwenkt wird, wobei die Verkürzung des Abstands eines Fortsatzes des Handgriffs, der an einen der Lenker angreift, durch eine gelenkige Verbindung und ein hierdurch ermöglichtes Abwinkeln der Lenker ausgeglichen wird.

Eine Feststellklinke ist zweckmäßigerweise mit einer Klinkenfeder in Richtung auf ein Zahnsegment vorgespannt, wobei die Vorspannung der Klinkenfeder durch Betätigung eines Druckknopfes oder durch Ziehen eines Zuggestänges aufgehoben werden kann, um die Feststellposition zu lösen. Die Klinkenfeder ist beispielsweise als Drehfeder ausgebildet, deren einer Schenkel an dem Hebelhalter und deren anderer Schenkel an dem der Verzahnung zugekehrten Hebelarm der Feststellklinke, die eine Eingriffsnase aufweist, angeordnet ist.

Die erfindungsgemäße Feststellbremse erlaubt es, in kleinbauender Weise eine Übersetzung des Bremsbetätigungshebels gegenüber dem Bremsseil auf einen Faktor zwischen zwei und elf zu erreichen, vorzugsweise zwischen vier und zehn. Es versteht sich, daß nach wie vor Bremsverstärkungsglieder im Bereich des Bremsseils vorgesehen werden können, vorteilhafterweise ist dies aber nicht mehr erforderlich. Insbesondere läßt sich eine Übersetzung einstellen, die eine bei Kraftfahrzeugfeststellbremsen geeignetes Ausmaß aufweist und ohne Bremsübersetzer auskommt. Die Höhe der Übersetzung ergibt sich aus der zweckmäßigen Auswahl des Abstandes der Gelenke der Hebel zueinander.

Vorzugsweise umfaßt die Ankoppelungseinheit eine Nachstelleinrichtung für das Bremsseil, wie sie beispielsweise aus der WO-A-98 57 832 bekannt ist, mit der bei abgelegter bzw. nicht betätigter Feststellbremse aufgrund einer Federkraft das Bremsseil nachgestellt wird, um auf große Temperaturunterschiede, insbesondere aber aufgrund des Verschleißes der Bremsbeläge jederzeit nach dem Lösen der Feststellbremse eine straffe Spannung des Bremsseils herbeizuführen.

Die erfindungsgemäße Feststellbremse kann gleichermaßen als Handfeststellbremse mit einem Handgriff ausgebildet werden, bei dem ein Druckknopf die Lösefunktion der Feststellklinke betätigt, wie auch als Fußfeststellbremse, bei der Bremsbetätigungshebel mit einem Pedal versehen ist und die Entriegelung der Feststellklinke über einen Zugmechanismus realisiert ist.

Weitere Vorteile und Merkmale der Erfindung ergeben sich aus der nachfolgenden Beschreibung sowie aus den abhängigen Ansprüchen.

Die Erfindung wird nachstehend unter Bezugnahme auf die anliegenden Zeichnungen anhand von bevorzugten Ausführungsbeispielen einer erfindungsgemäßen Feststellbremse näher erläutert.
- Fig.1: zeigt eine perspektivische Ansicht eines bevorzugten Ausführungsbeispiels einer erfindungsgemäßen Feststellbremse in einem unbetätigten Zustand.
- Fig. 2: zeigt eine schematische Seitenansicht der Feststellbremse gemäß Fig. 1 in einem unbetätigten Zustand.
- Fig. 3: zeigt eine Draufsicht von oben auf die Feststellbremse gemäß Fig. 1 und 2.
- Fig. 4: zeigt eine Seitenansicht eines weiteren bevorzugten Ausführungsbeispiels einer erfindungsgemäßen Feststellbremse in einem unbetätigten Zustand.
- Fig. 5: zeigt eine schematische Seitenansicht der Feststellbremse gemäß Fig. 4 in einem unbetätigten Zustand mit teilweise weggebrochenen Teilen.
- Fig. 6: zeigt eine Draufsicht von oben auf die Feststellbremse gemäß Fig. 4 und 5.

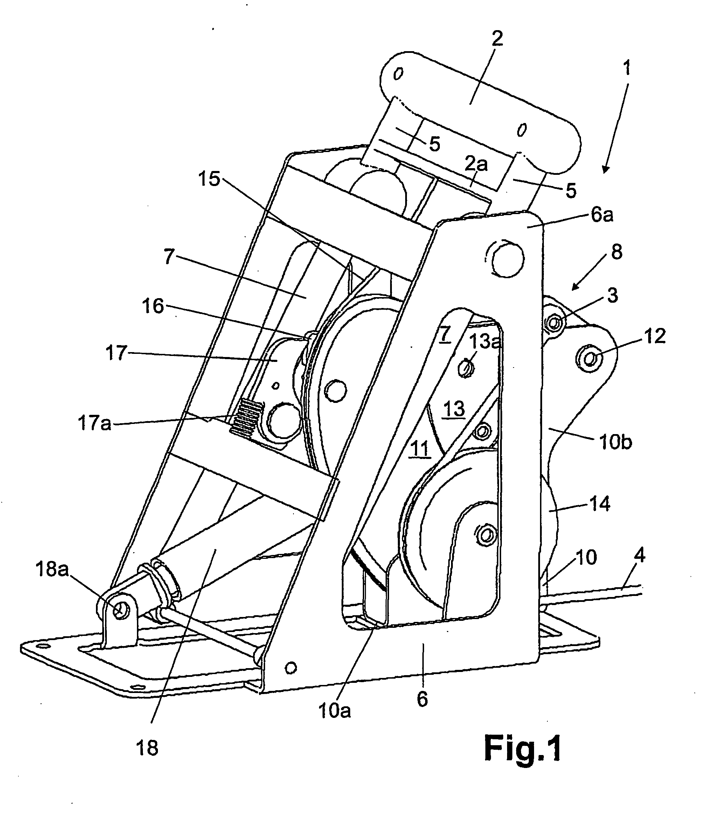

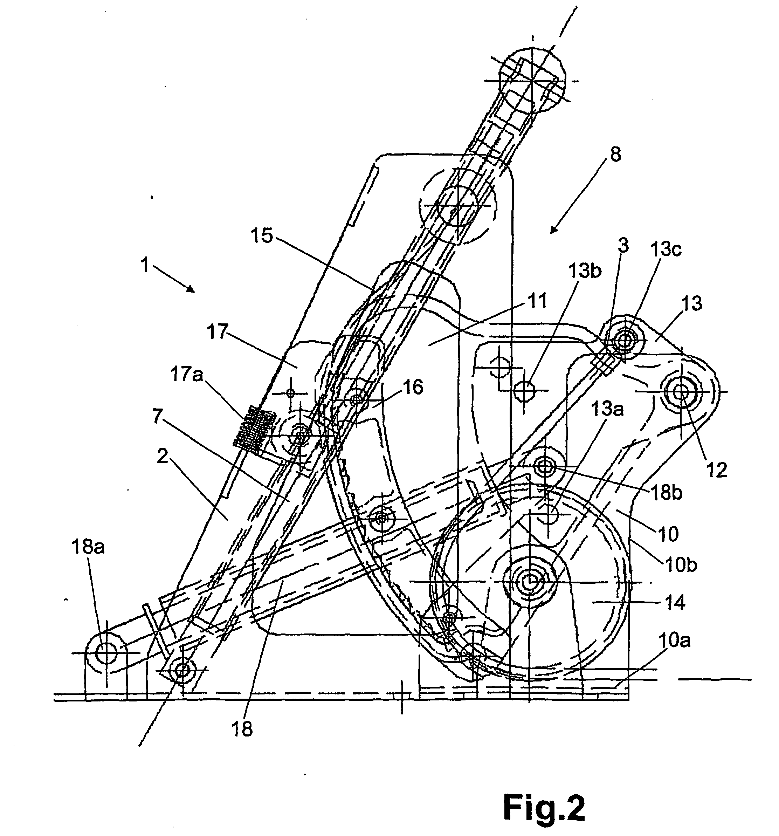

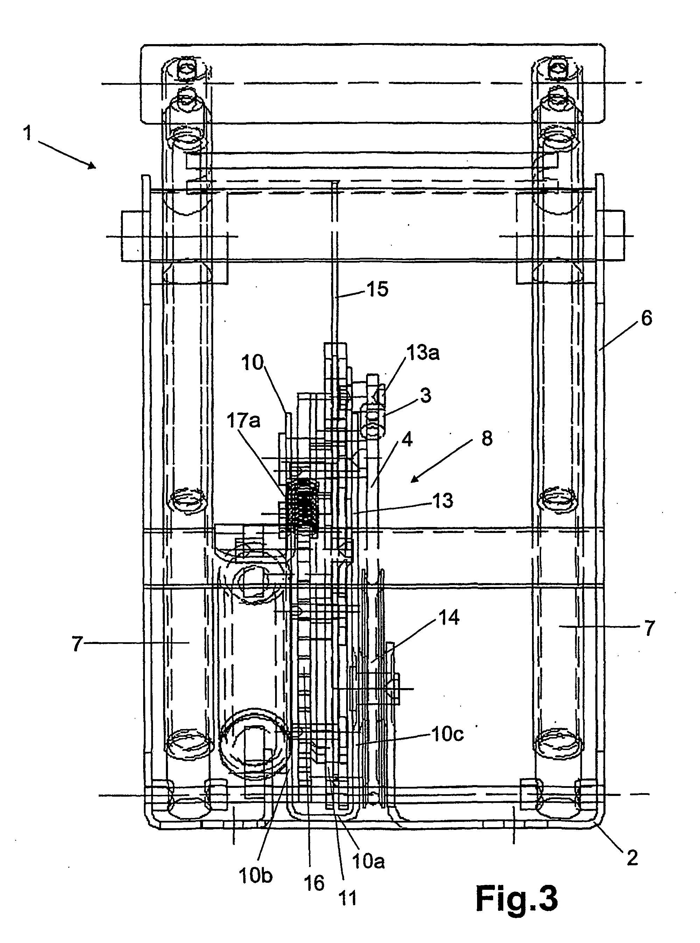

Bei der in Fig. 1 bis 3 dargestellten Feststellbremse handelt es sich um eine Handfeststellbremse 1, die durch Ziehen eines Handgriffs 2 ein an einer Ankoppelungseinheit 3 ansetzendes Bremsseil 4 spannt. Der Handgriff 2 ist auf zwei parallelen, am Handgriff 2 angeordneten Zapfen 5 befestigt, die zur axialen Verlagerung in Richtung der Zapfen 5 in zwei parallel von einem karosseriefesten Halter 6 abstehenden, eine Längsführung definierenden Rohren 7 axial geführt werden. Das obere Ende der Rohre 7 ist über einen vertikal aufragenden Träger 6a des Halters 6 abgestützt.

Die Rohre 7 stehen in einem Winkel von etwa 30° zur Vertikalen und 60° zur Horizontalen entgegen der Fahrtrichtung des Fahrzeugs ab, so daß der Handgriff 2 ergonomisch günstig mit der Hand eines Fahrers umgriffen und herangezogen werden kann. Hierfür kann eine Handballenpolsterung vorgesehen sein.

Zwischen dem Handgriff 2 und der Ankoppelungseinkeit 3 für das Bremsseil 4 ist eine insgesamt mit 8 bezeichnete Übersetzungseinheit eingeschaltet, die die lineare Betätigung des Handgriffs 2 in eine ebenfalls lineare Zugbewegung auf das Bremsseil 4 übersetzt, wobei vorliegend der längere Weg des Handgriffs 2 zur Herabsetzung der zur Betätigung erforderlichen Kraft einen linear proportional kürzen Anzugsweg des Bremsseils 4 bewirkt.

Hierzu weist die Übersetzungseinheit 8 einen weiteren Trägerteil 10 auf, der Blechteil ausgebildet ist und einen U-förmigen Querschnitt aufweist, wobei eine Basis 10a des U auf dem Halter 2 angeordnet ist und die beiden Schenkel 10b, 10c des U im wesentlichen nach oben abgewinkelt sind. Die beiden Schenkel 10b, 10c weisen ferner weisen eine Auskragung auf, in der ein Segment einer Seilscheibe 11 zwischen den beiden Schenkeln 10b, 10c in einem Gelenk 12 gelagert ist.

Ferner ist im Bereich des Gelenks 12 ein Plattenkörper 13 gelagert, der an der Seilscheibe 11 festgelegt ist und mit diesem um die Anlenkung 12 gemeinsam verschwenkbar ist. Hierzu sind Nietverbindungen 13a, 13b zwischen den beiden Teilen vorgesehen. Der Plattenkörper weist darüber hinaus in einem geringen Abstand zu der Anlenkung 12 eine Anlenkung 13c für eine Ankoppelungseinheit 3 für das Bremsseil 4 auf. Um das in etwa im Abstand der Seilscheibe 11 abgehende Bremsseil 4 in einem kürzeren Abstand zu der Anlenkung 12 anzubringen, ist dieses über eine Umlenkscheibe 14 geführt, die mittig an einer Anlenkung 15 in dem Rahmen 2 gelagert ist und die das Bremsseil 4 umfangsmäßig führt. Der Seilabgang ist somit auf dem Plattenkörper 13 so angeordnet, daß bei Drehung der Seilscheibe 11 auch das Bremsseil 14 gedreht wird.

Auf dem Umfang der Seilscheibe 11 ist ein Zugseil 15 festgelegt, dessen anderes Ende an den Handgriff 2 gekoppelt ist. Im vorliegenden Ausführungsbeispiel ist das andere Ende des Zugseils 15 mittig an einer Querstrebe 2a zwischen den beiden Rohren 7 angeordnet, die zu dem Handgriff 2 parallel verläuft. Damit ist es vorteilhaft möglich, den Ansatz der Zugseils 15 zu verkleiden.

Die für das Ziehen des Handgriffs 2 aufzubringende Kraft hängt dann einerseits von den durch die Achsabstände zu der Schwenkachse definierten Hebelverhältnisse des Radius der Seilscheibe 11 und der Bremsseilanlenkung 13c ab. Man erkennt, daß der Radius der Seilscheibe 11 sich über deren Umfang ändert und damit eine progressive Änderung der Hebelverhältnisse vorgesehen ist.

Im Bereich des Umfangs der Seilscheibe 11 ist ein Zahnsegment 16 angeordnet, und eine an dem Halter 6 schwenkbar angeordnete Klinke 17 wird durch eine Feder 17a in Richtung auf das Zahnsegment 16 vorgespannt und kann mit diesem ratschend zusammengreifen und die Feststellbremse festlegen. Die Klinke 17 kann durch Betätigen eines Druckknopfes 18 im Bereich des Handgriffs 2, der über eine Auslöseeinrichtung 19 mit der Klinke in Verbindung steht, entgegen der Vorspannung der Feder und ggf. einer weiteren Sicherungsfeder gelöst werden, wodurch unter der Zugspannung des Bremsseils 3 auf die Übersetzungseinheit die Zahnstange 10 und damit der Handgriff 2 zurück in eine gelöste Stellung zurückverlagert werden. Es ist möglich, eine Feder in dem Führungssystem des Handgriffs zu integrieren, wodurch eine Feder auch noch das letzte Stück, in dem das Bremsseil 4 bereits entlastet ist, zurückgeführt wird. Ferner kann zur Dämpfung der Geräusche und der Bewegung des Handgriffs eine Gasfederung im Bereich der Rohre 7 integriert sein, um den Handgriff nach Lösen der Feder langsam zurück in die Ausgangslage zurück gleiten zu lassen. Vorzugsweise umfaßt das Bremsseil 4 eine selbsttätig nachstellende Seilzugnachstellung, die im unbelasteten Zustand der Feststellbremse das Bremsseil nachstellt. Die Auslöseeinrichtung 19 ist biegsam und damit ausziehbar.

Es ist vorzugsweise eine motorische Unterstützung der Feststellbremse vorgesehen, entweder hydraulisch oder pneumatisch im Bereich der Führung des Handgriffs oder über ein angetriebenes Zahnrad, z.B. mit der Zahnstange.

In dem vorliegenden Ausführungsbeispiel ist zur Unterstützung der Zugbewegung eine Unterstützungseineit 18 vorgesehen, die vorliegend eine mechanische Druckfeder umfaßt, aber auch als Gasdruckfeder ausgestaltet sein kann, wobei deren eines Ende 18a an dem Rahmen 2 bzw. an der Karosserie festgelegt ist und deren anderes Ende 18b an der Seilscheibe 11 angelenkt ist. Die Unterstützungseinheit wirkt erst nach Überschreiten einer Totpunktlage in Richtung auf ein Anziehen der Feststellbremse 1. Die zugehörige Feder wird beim Lösen der Feststellbremse 1 durch die Kraft des Bremsseils 4 wieder gespannt.

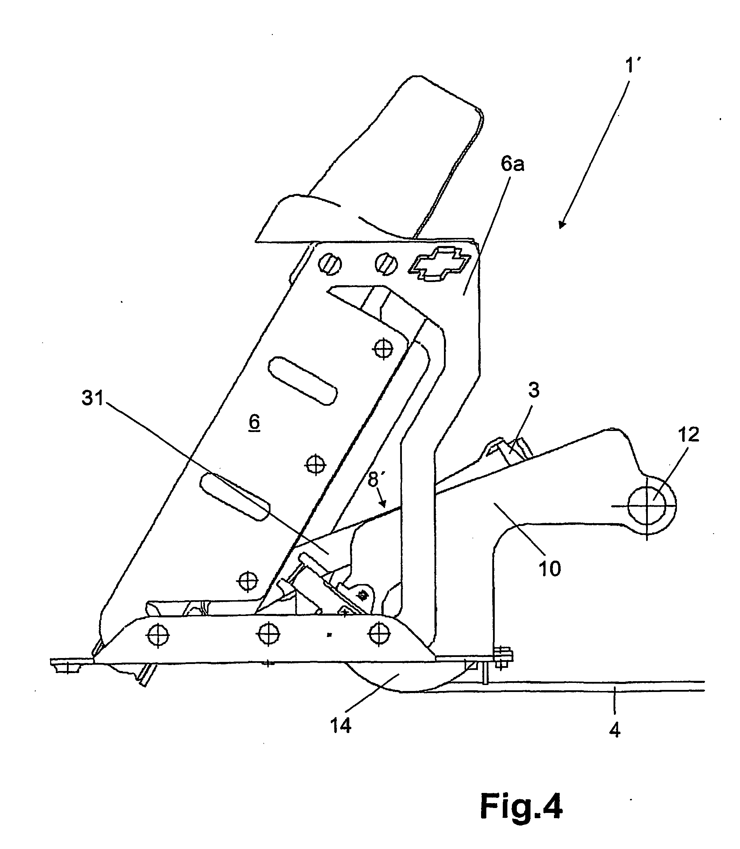

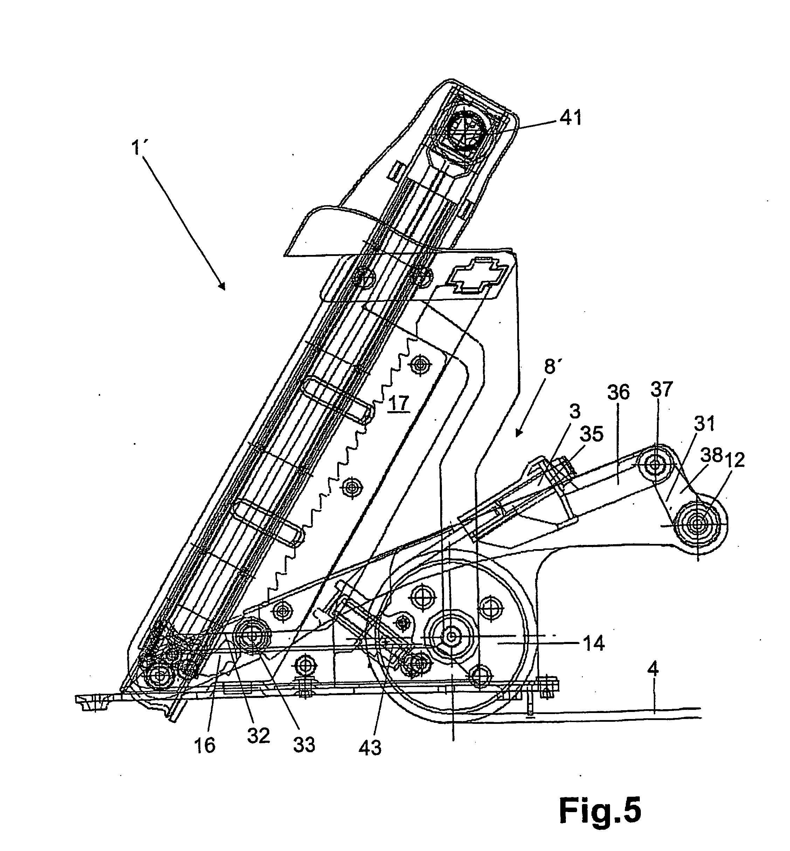

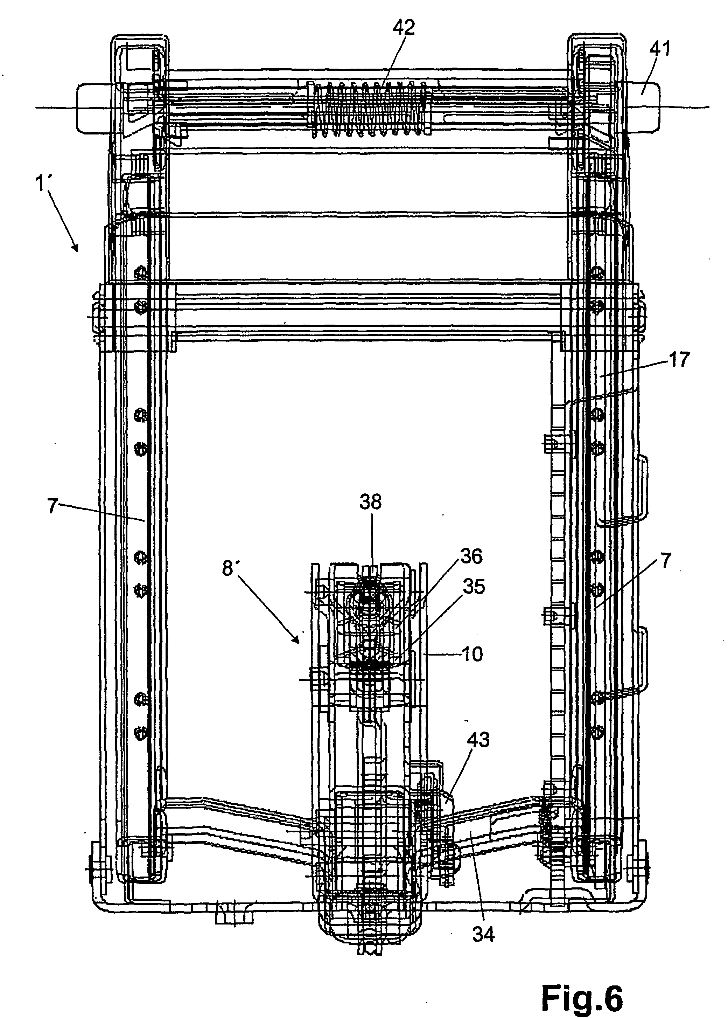

Das in Fig. 4 bis 6 dargestellte weitere Ausführungsbeispiel einer erfindungsgemäßen Feststellbremse 1' verfügt im wesentlichen über dieselben Bestandteile wie die vorstehend beschriebene Feststellbremse 1, weshalb zur Vereinfachung dieselben Bezugszeichen verwendet werden, soweit die Teile funktionell übereinstimmen und nur auf die Unterschiede nachstehend näher eingegangen wird.

Im Unterschied zu der Feststellbremse 1 weist die Feststellbremse 1' aus Fig. 4 bis 6 eine Übersetzungseinheit 8', die als Mehrgelenkgetriebe einen langen Hebel 31 aufweist, der in dem Trägerteil 10 im Bereich einer Anlenkung 12 gelagert ist. Ferner umfaßt die Übersetzungseinheit 8' einen kurzen Lenker 32, der mit dem langen Lenker 31 über ein Gelenk 33 gekoppelt ist und der relativ zu dem langen Lenker 31 einen Winkel einnehmen kann. Der kurze Lenker 32 ist mit einem stegartigen Fortsatz 34 des Handgriffs 2 gekoppelt, so daß ein Ziehen des Handgriffs 2 den kurzen Lenker 32 um das Gelenk 33 und den langen Lenker 31 um das Gelenk 12 verlagert. Hierbei knickt der kurze Lenker 32 gegenüber dem langen Lenker 31 ab und kompensiert den sich verkürzenden Abstand des Fortsatzes 34 zu der Anlenkung 12.

Eine Ankoppelungseinheit 3 für das Bremsseil 4 ist in einer Aufnahme 35 eingesetzt. Die Aufnahme 35 ist über einen ersten Hebel 36 in dem langen Lenker 31 an einer Anlenkung 37 gelagert, wobei ein weiterer Hebel 38 starr von dem ersten Hebel 36 absteht und in der Anlenkung 12 festgelegt ist. Hierdurch wird ein Durchdrehen in der Anlenkung 37 vermieden. Der lange Lenker 31 nimmt den ersten Hebel 36 hierdurch mit, so daß die Hebelverhältnisse auch hier von den Abständen Aufnahme 35 zu Anlenkung 12 einerseits und Anlenkung 12 zu Fortsatz 34 andererseits bestimmt werden. Es versteht sich, daß auch hier eine Unterstützungseinrichtung vorgesehen sein kann.

Die Ankoppelungseinrichtung 3 überträgt demnach gemäß der durch die Achsverhältnisse der Lenker und Hebel definierten, sich ändernden Übersetzung eine Zugkraft auf das Bremsseil 4.

Eine Klinke 17 ist ebenfalls schwenkbar an dem Fortsatz 34 angeordnet, während ein zugehöriges Zahnsegment 16 entlang einem der beiden Rohre 6, die vorliegend eckig ausgebildet sind, vorgesehen ist und legt die jeweils durch Ziehen des Handgriffs 2 eingestellte Feststellposition durch Rasten mit einem am Rahmen 6 angeordnetes Zahnsegment 16 fest.

Die Klinke 17 ist durch eine Feder 17a in Richtung auf das Zahnsegment 16 vorgespannt und kann über eine Druckstange, die bei Betätigung eines im Bereich des Handgriffs 2 angeordneten Löseknopfs 41 gespannt wird, gelöst werden. Der Löseknopf 41 kann entgegen der Vorspannung einer im Handgriff angeordneten Druckfeder 42 betätigt werden, um die Klinke 17 zu entriegeln.

Mit 43 ist ein Kontaktschalter für eine elektrische Anzeige bezeichnet.

Es ist auch hier möglich, einen motorischen Hilfsantrieb entweder im Bereich der Führung des Handriffs 2 oder im Bereich eines der Drehgelenke der Übersetzungseinrichtung 8' vorzusehen.

Beide Feststellbremsen 1 und 1' ermöglichen vorteilhaft den Einbau einer kleinbauenden Bremseinheit in dem Innenraum eines Kraftfahrzeugs, so daß wahlweise der Zwischenraum vor oder hinter dem Handgriff 2 zum Anordnen von Armlehnen, Cuphaltern oder dergl. vorgesehen werden kann.

Die Erfindung ist vorstehend anhand bestimmter Achsenabstände der Gelenke bzw. der Zahnräder erläutert worden. Es versteht sich, daß die Achsenabstände zur Einstellung eines bestimmten Übersetzungsverhältnisses erfindungsgemäß auch anders angeordnet werden können, und es versteht sich ferner, daß auch zur Erreichung einer günstigeren Übersetzung ein weiterer Zwischenhebel vorgesehen werden kann. Schließlich können die beschriebenen Elemente der beiden Ausführungsbeispiele zur Erreichung einer erfindungsgemäßen Feststellbremse auch kombiniert werden.

Die Erfindung ist vorstehend anhand einer Handfeststellbremse 1 bzw. 1' beispielhaft näher erläutert worden. Es versteht sich, daß die erfindungsgemäße Festsellbremse auch als Fußfeststellbremse mit einem Pedal ausgebildet sein kann, wobei der Handgriff 2 dann als Pedal vorgesehen ist, auf das ein Druck und nicht ein Zug ausgeübt wird. Der Löseknopf zum Lösen der Feststellklinke kann dann auch an anderer Stelle zur Handbetätigung vorgesehen sein.

## Patentansprüche

1. Feststellbremse für ein Fahrzeug, umfassend
einen relativ zu einem Halter (6) verlagerbaren Griff (2), wobei der Griff (2) über eine Führung (5, 7) relativ zu dem Halter (6) axial verlagerbar ist,
eine Ankoppelungseinheit (3), die ein Bremsseil (4) bei Verlagerung des Griffs (2) spannt, und
eine Feststelleinrichtung (16, 17), um den Griff (2) in einer Feststellposition zu halten, wobei mit dem Halter (6) eine Übersetzungseinheit (8, 8') gekoppelt ist, die die axiale Verlagerung eines dem Griff (2) zugeordneten Teils in eine Betätigung des Bremsseils (4) umsetzt,
**dadurch gekennzeichnet,**
**dass** die Führung (5, 7) zwei parallele Rohre (7) aufweist, in denen jeweils ein Zapfen (5) geführt ist, und
**dass** der Griff (2) an Enden der zwei Zapfen (5) senkrecht zu deren Erstreckungsrichtung angeordnet ist.

2. Feststellbremse für ein Fahrzeug, insbesondere nach Anspruch 1, umfassend
einen relativ zu einem Halter (6) verlagerbaren Griff (2), wobei der Griff (2) über eine Führung (5, 7) relativ zu dem Halter (6) axial verlagerbar ist,
eine Ankoppelungseinheit (3), die ein Bremsseil (4) bei Verlagerung des Griffs (2) spannt, und
eine Feststelleinrichtung (16, 17), um den Griff (2) in einer Feststellposition zu halten, wobei mit dem Halter (6) eine Übersetzungseinheit (8') gekoppelt ist, die die axiale Verlagerung eines dem Griff (2) zugeordneten Teils in eine Betätigung des Bremsseils (4) umsetzt, wobei die Übersetzungseinheit (8') ein Mehrgelenkgetriebe umfasst, und wobei das Mehrgelenkgetriebe einen an einem karosseriefesten Trägerteil (10) schwenkbar gelagerten und mit dem Griff (2) gekoppelten langen Lenker (31) sowie einen gelenkig mit dem langen Lenker (31) verbundenen, kurzen Lenker (31) umfasst, und wobei ein an den Griff (2) parallel zur Venagerungsrichtung ansetzender Fortsatz (34) vorgesehen ist,
**dadurch gekennzeichnet,**
**dass** die Koppelung des langen Lenkers (32) mit dem Griff (2) wenigstens den kurzen Lenker (31) umfasst,
**dass** der kurze Lenker (32) und der lange Lenker (31) zum Ausgleich der Verlagerung des Griffs (2) zueinander abwinkeln, und
**dass** der Fortsatz (34) schwenkbar mit dem kurzen Lenker (32) gekoppelt ist.

3. Feststellbremse nach Anspruch 2, **dadurch gekennzeichnet, dass** der Fortsatz (34) starr mit dem Griff (2) gekoppelt ist.

4. Feststellbremse nach Anspruch 2 oder 3, **dadurch gekennzeichnet, dass** die Feststelleinrichtung außerhalb der Führung (5, 7) im Bereich der Übersetzungseinheit (8') angeordnet ist.

5. Feststellbremse nach einem der Ansprüche 2 bis 4, **dadurch gekennzeichnet, dass** der lange Lenker (31) an einer Anlenkung des Trägerteils (10) schwenkbar gelagert ist.

6. Feststellbremse nach einem der Ansprüche 2 bis 5 **dadurch gekennzeichnet, dass** mit dem langen Lenker (31) ein Hebel (36, 38) gekoppelt ist, an dem die Ankopplungseinheit (3) für das Bremsseil angreift.

7. Feststellbremse nach einem der Ansprüche 2 bis 6, **dadurch gekennzeichnet, dass** der kurze Lenker (32) und der lange Lenker (31) in der abgelegten Stellung einen Winkel zueinander aufweisen, der das Ausknicken nach oben ermöglicht.

8. Feststellbremse für ein Fahrzeug, insbesondere nach Anspruch 1, umfassend
einen relativ zu einem Halter (6) verlagerbaren Griff (2), wobei der Griff (2) über eine Führung (5, 7) relativ zu dem Halter (6) axial verlagerbar ist,
eine Ankoppelungseinheit (3), die ein Bremsseil (4) bei Verlagerung des Griffs (2) spannt, und
eine Feststelleinrichtung (16, 17), um das Bremsseil (4) in einer Feststellposition zu halten, wobei mit dem Halter (6) eine Übersetzungseinheit (8) gekoppelt ist, die die axiale Verlagerung eines dem Griff (2) zugeordneten Teils in eine Betätigung des Bremsseils (4) umsetzt,
**dadurch gekennzeichnet,**
**dass** die Übersetzungseinheit (8) zumindest ein an der Führung (5, 7) vorbei schwenkendes Segment einer Seilscheibe (11) umfaßt,
**dass** die Ankoppelungseinheit (3) für das Bremsseil (4) an der Seilscheibe (11) angeordnet ist, und
**dass** ein an der Seilscheibe (11) umfangsmäßig geführtes Zugseil (15) den Griff (2) mit der Übersetzungseinheit (8) verbindet.

9. Feststellbremse nach Anspruch 8, **dadurch gekennzeichnet, dass** das Zugseil (15) an der Seilscheibe (11) festgelegt ist.

10. Feststellbremse nach Anspruch 8 oder 9, **dadurch gekennzeichnet, dass** die Ankoppelungseinheit (3) in einem festen Abstand um einer Schwenkachse der Seilscheibe (11) verschwenkbar ist.

11. Feststellbremse nach einem der Ansprüche 8 bis 10, **dadurch gekennzeichnet, dass** mit der Seilscheibe (11) ein Plattenkörper (13) gekoppelt ist, und dass die Ankoppelungseinheit (3) an dem Plattenkörper (13) vorgesehen ist.

12. Feststellbremse nach einem der Ansprüche 8 bis 11, **dadurch gekennzeichnet, dass** die Übersetzungseinheit (8) an einem karosseriefesten Trägerteil (10) gelagert ist, und dass das Trägerteil (10) an dem Halter (6) festgelegt ist.

13. Feststellbremse nach Anspruch 12, **dadurch gekennzeichnet, dass** das Trägerteil (10) eine Anlenkung (12) aufweist, in der wenigstens ein Abschnitt der Seilscheibe (11) gelagert ist.

14. Feststellbremse nach Anspruch 12 oder 13, **dadurch gekennzeichnet, dass** außerhalb der Anlenkung (12) an dem Trägerteil (10) ein Lenker an der Seilscheibe (11) gelagert ist.

15. Feststellbremse nach Anspruch 14, **dadurch gekennzeichnet, dass** der Lenker mit einem der Anlenkung an der Seilscheibe (11) abgekehrten Ende an dem Trägerteil (10) anliegt.

16. Feststellbremse nach Anspruch 14 oder 15, **dadurch gekennzeichnet, dass** der Lenker einen abgewinkelten Schenkel aufweist, an dessen Ende die Ankoppelung (3) des Bremsseils (4) vorgesehen ist.

17. Feststellbremse nach einem der Ansprüche 12 bis 16, **dadurch gekennzeichnet, dass** die Ankoppelungseinheit (3) einen geringeren Abstand zur Anlenkung (12) der Seilscheibe (11) an dem Trägerteil (10) als deren Radius aufweist.

18. Feststellbremse nach einem der Ansprüche 12 bis 17, **dadurch gekennzeichnet, dass** das Trägerteil (10) einen U-förmigen Querschnitt mit zwei emporstehenden Schenkel (10b, 10c) aufweist, und dass die Seilscheibe (11) zwischen den beiden Schenkeln (10b, 10c) gelagert ist.

19. Feststellbremse nach einem der Ansprüche 8 bis 18, dadurch gekenneichnet, dass das Zugseil (15) an einer zum Griff (2) parallelen Strebe (2a) angeordnet ist.

20. Feststellbremse nach einem der Ansprüche 8 bis 19, **dadurch gekennzeichnet, dass** eine Unterstützungseinrichtung (18) vorgesehen ist, die einerseits (18b) außerhalb der Anlenkung (12) an der Seilscheibe (11) und andererseits (18a) im Bereich der Karosserie angreift.

21. Feststelbremse nach einem der Ansprüche 1 bis 20, **dadurch gekennzeichnet, dass** der Übersetzungseinheit (8, 8') eine Umlenkscheibe (14) zugeordnet ist, und dass das Bremsseil (4) über einen Umfang der Umlenkscheibe (14) zu der Ankopplungseinheit (3) geführt ist.

22. Feststellbremse nach einem der Ansprüche 1 bis 21, **dadurch gekennzeichnet, dass** wenigstens ein Rohr (7) wenigstens abschnittsweise einen Schlitz aufweist, und dass an dem entsprechenden Zapfen (5) ein durch den Schlitz hinausragender Gelenkabschnitt vorgesehen ist, wobei an dem Gelenkabschnitt die Übersetzungseinheit (8; 8') angreift.

23. Feststellbremse nach einem der Ansprüche 1 bis 22, **dadurch gekennzeichnet, dass** die Führung (5, 7) für den Griff (2) eine Dämpfeinrichtung aufweist, die nach Lösen der Feststelleinrichtung (16, 17) für den Bremszustand den Griff (2) leise und langsam in seine Ausgangsstellung zurück gelangen läßt.

24. Feststellbremse nach einem der Ansprüche 1 bis 23, **dadurch gekennzeichnet, dass** die Feststelleinrichtung eine Klinke (17) umfaßt, die in ein Zahnsegment (16) der Feststelleinrichtung eingreift.

25. Feststellbremse nach Anspruch 24, **dadurch gekennzeichnet, dass** eine Klinkenfeder (17a) zur Vorspannung der Klinke (17) in Richtung auf das Zahnsegment (16) vorgesehen ist.

26. Feststellbremse nach einem der Ansprüche 1 bis 25, **dadurch gekennzeichnet, dass** eine Auslöseeinrichtung (18, 19) vorgesehen ist, um die Feststelleinrichtung (16, 17) zu lösen.

27. Feststellbremse nach einem der Ansprüche 1 bis 26, **gekennzeichnet durch** eine Übersetzung des Griffs (2) gegenüber dem Bremsseil (4) um einen Faktor zwischen drei und fünfzehn.

28. Feststellbremse nach einem der Ansprüche 1 bis 27, **dadurch gekennzeichnet, dass** die Ankoppelungseinheit (3) eine Nachstelleinrichtung für das Bremsseil (4) umfaßt.

29. Feststellbremse nach einem der Ansprüche 1 bis 28, **gekennzeichnet durch** eine Ausgestaltung des Griffs als ein Handgriff für eine Handfeststellbremse.

30. Feststellbremse nach einem der Ansprüche 1 bis 28, **gekennzeichnet durch** eine Ausgestaltung als eine Fußfeststellbremse.

31. Feststellbremse nach einem der Ansprüche 1 bis 30, **gekennzeichnet durch** eine motorische Unterstützung zum Anziehen und/oder Lösen der Feststellbremse.

## Claims

1. A parking brake for a vehicle, comprising
a grip (2) which can be displaced relative to a holder (6), the grip (2) can be pulled away axially from the holder (6) via a guide (5, 7),
a coupling unit (3) which tensions a brake cable (4) during displacement of the grip (2), and
a locking device (16, 17) in order to hold the grip (2) in a locking position, a conversion unit (8; 8') being coupled to the holder (2) and converting the axial displacement of a part assigned to the grip (2) into tensioning of the brake cable (4),
**characterized in**
**that** the guide (5, 7) comprises two parallel tubes (7) each guiding a pin (5), and
**that** the grip (2) is arranged at two ends of the pins (5), being oriented vertically to the extension of said pins (5).

2. A parking brake for a vehicle, in particular as claimed in claim 1, comprising
a grip (2) which can be displaced relative to a holder (6), the grip (2) can be pulled away axially from the holder (6) via a guide (5, 7),
a coupling unit (3) which tensions a brake cable (4) during displacement of the grip (2), and
a locking device (16, 17) in order to hold the grip (2) in a locking position, a conversion unit (8; 8') being coupled to the holder (2) and converting the axial displacement of a part assigned to the grip (2) into tensioning of the brake cable (4), the conversion unit (8') comprising a multi-joint transmission, and the conversion unit comprising a long link (31) being mounted pivotably on a support part (10) and being coupled to the grip (2) and a short link (32) being connected pivotably to the long link (31), and an extension (34) being provided at the grip (2), said extension being arranged parallel to the displacement direction,
**characterized in**
**that** the coupling of the long link (31) with the grip (2) at least comprises the short link (32),
**that** the short link (31) and the long link (31) bend with respect to each other in order to compensate for the displacement of the grip (2), and
**that** the extension (34) is coupled pivotably to the short link (32).

3. The parking brake as claimed in claim 2, **characterized in that** the extension (34) is connected rigidly to the grip (2).

4. The parking brake as claimed in claim 2 or 3, **characterized in that** the locking device is provided outside the guide (5, 7) in the region of the conversion unit (8').

5. The parking brake as claimed in one of claims 2 to 4, **characterized in that** the long link (31) is mounted pivotably on an articulation of the support part (10).

6. The parking brake as claimed in one of claims 2 to 5, **characterized in that** a lever (36, 38) is coupled to the long link (31) and the coupling unit (3) for the brake cable (4) engages on said lever.

7. The parking brake as claimed in one of claims 2 to 6, **characterized in that** the short link (32) and the long link (31) in the deposited position are at an angle to each other which makes buckling upward possible.

8. A parking brake for a vehicle, in particular as claimed in claim 1, comprising
a grip (2) which can be displaced relative to a holder (6), the grip (2) can be pulled away axially from the holder (6) via a guide (5, 7),
a coupling unit (3) which tensions a brake cable (4) during displacement of the grip (2), and
a locking device (16, 17) in order to hold the grip (2) in a locking position, a conversion unit (8) being coupled to the holder (2) and converting the axial displacement of a part assigned to the grip (2) into tensioning of the brake cable (4),
**characterized in**
**that** the conversion unit (8) at least comprises a segment of a cable pulley (11) pivoting past the guide (5, 7),
**that** the coupling unit (3) for the break cable (4) is arranged at the cable pulley (11), and
**that** the cable pulley (11) guides peripherally a traction cable (15) coupling the grip (2) with the conversion unit (8).

9. The parking brake as claimed in claim 8, **characterized in that** the traction cable (15) is fastened to the cable pulley (11).

10. The parking brake as claimed in claim 8 or 9, **characterized in that** the coupling unit (3) is pivotably mounted at an articulation on the cable pulley (11) in a fixed distance.

11. The parking brake as claimed in one of claims 8 to 10, **characterized in that** the coupling unit (3) is arranged on a plate body (13) coupled to the cable pulley (11).

12. The parking brake as claimed in of claims 8 to 11, **characterized in that** the conversion unit (8) is mounted at a support part (10) being connected to a bodywork, and that the support part (10) is fastened to the holder (6).

13. The parking brake as claimed in claim 12, **characterized in that** the support part (10) provides an articulation (12), in which at least a section of the cable pulley (11) is mounted.

14. The parking brake as claimed in claim 12 or 13, **characterized in that** outside the articualtion (12) on the support part (10) a link is mounted on the cable pulley (11).

15. The parking brake as claimed in claim 14, **characterized in that** the link bears against the support part (10) at an end facing away from the articulation on the cable pulley (11).

16. The parking brake as claimed in claim 14 or 15, **characterized in that** the link provides an angled limb with the brake cable (4) coupled to the end thereof.

17. The parking brake as claimed in one of claims 12 to 16, **characterized in that** the coupling unit (3) is at a smaller distance from the articulation (12) of the cable pulley (11) on the support part (10) than the radius of said cable pulley (11).

18. The parking brake as claimed in one of claims 12 to 17, **characterized in that** the support part (10) has a U-shaped cross section with two upwardly projecting limbs (10b, 10c), and that the cable pulley (11) is mounted between the two limbs (10b, 10c).

19. The parking brake as claimed in one of claims 8 to 18, **characterized in that** the traction cable (15) is arranged on a strut (2a) parallel to the grip (2).

20. The parking brake as claimed in one of claims 8 to 19, **characterized in that** a power assist device (18) is provided which engages at one end (18b) outside an articulation (12) on the cable pulley (11) and at the other end (18a) in the region of the bodywork.

21. The parking brake as claimed in one of claims 1 to 20, **characterized in that** a deflection roller (14) is assigned to the conversion unit (8, 8'), and that the brake cable (4) is guided via a periphery of the deflection roller (14) to the brake cable articulation (3).

22. The parking brake as claimed in one of claims 1 to 21, **characterized in that** at least one tube (7) has a slot in at least some sections, and an articulated section protruding through the slot is provided on the corresponding pin (5), the conversion unit (8; 8') engaging on the articulated section.

23. The parking brake as claimed in one of claims 1 to 22, **characterized in that** the guide (5, 7) for the grip (2) has a damping device which, after release of the locking device (16, 17) for the braking state, enables the grip (2) to move back softly and slowly into its starting position.

24. The parking brake as claimed in one of claims 1 to 23, **characterized in that** the locking device comprises a catch (17) which engages in a tooth segment (16).

25. The parking brake as claimed in claim 24, **characterized in that** a catch spring (17a) for pretensioning the catch (17) in a direction of the tooth segment (16) is provided.

26. The parking brake as claimed in one of claims 1 to 25, **characterized in that** a release device (18, 19) is provided in order to release the locking device (16, 17).

27. The parking brake as claimed in one of claims 1 to 26, comprising a step-up of the grip (2) relative to the brake cable (4) by a factor of between three and fifteen.

28. The parking brake as claimed in one of claims 1 to 27, **characterized in that** the coupling unit (3) comprises an adjusting device for the brake cable (4).

29. The parking brake as claimed in one of claims 1 to 28, which comprises a design of the grip (2) as a hand-grip for a hand-operated parking brake.

30. The parking brake as claimed in one of claims 1 to 28, which comprises a design of the grip (2) as a pedal for a foot-operated parking brake.

31. The parking brake as claimed in one of claims 1 to 30, which comprises a motor-driven power assist for applying and/or releasing the parking brake.

## Revendications

1. Frein de stationnement pour un véhicule, comprenant
une poignée (2) déplaçable par rapport à un support (6), la poignée (2) pouvant être déplacée axialement par le biais d'un dispositif de guidage (5, 7) par rapport au support (6),
une unité d'accouplement (3) qui tend un câble de frein (4) lors du déplacement de la poignée (2), et
un dispositif de stationnement (16, 17) destiné à maintenir la poignée (2) dans une position de stationnement, une unité de transmission (8, 8') étant accouplée au support (6), laquelle convertit le déplacement axial d'une pièce associée à la poignée (2) en un actionnement du câble de frein (4),
**caractérisé en ce que**
le dispositif de guidage (5, 7) comprend deux tubes parallèles (7) dans lesquels est guidé à chaque fois un tourillon (5), et
**en ce que** la poignée (2) est disposée aux extrémités des deux tourillons (5) perpendiculairement à leur étendue.

2. Frein de stationnement pour un véhicule, notamment selon la revendication 1, comprenant
une poignée (2) déplaçable par rapport à un support (6), la poignée (2) pouvant être déplacée axialement par le biais d'un dispositif de guidage (5, 7) par rapport au support (6),
une unité d'accouplement (3) qui tend un câble de frein (4) lors du déplacement de la poignée (2), et
un dispositif de stationnement (16, 17) destiné à maintenir la poignée (2) dans une position de stationnement, une unité de transmission (8') étant accouplée au support (6), laquelle convertit le déplacement axial d'une pièce associée à la poignée (2) en un actionnement du câble de frein (4), l'unité de transmission (8') comprenant une transmission à articulations multiples et la transmission à articulations multiples comprenant un bras oscillant long (31) monté à pivotement sur une pièce support (10) fixée à la carrosserie et accouplé à la poignée (2) ainsi qu'un bras oscillant court (32) connecté de manière articulée au bras oscillant long (31), une saillie (34) ajoutée sur la poignée (2) parallèlement à la direction de déplacement étant prévue,
**caractérisé en ce que**
l'accouplement du bras oscillant long (31) à la poignée (2) comprend au moins le bras oscillant court (32),
**en ce que** le bras oscillant court (32) et le bras oscillant long (31) sont coudés l'un par rapport à l'autre pour la compensation du déplacement de la poignée (2) et
**en ce que** la saillie (34) est accouplée à pivotement au bras oscillant court (32).

3. Frein de stationnement selon la revendication 2, **caractérisé en ce que** la saillie (34) est accouplée rigidement à la poignée (2).

4. Frein de stationnement selon la revendication 2 ou 3, **caractérisé en ce que** le dispositif de stationnement est disposé en dehors du dispositif de guidage (5, 7) dans la région de l'unité de transmission (8').

5. Frein de stationnement selon l'une quelconque des revendications 2 à 4, **caractérisé en ce que** le bras oscillant long (31) est monté pivotant sur une articulation de la pièce support (10).

6. Frein de stationnement selon l'une quelconque des revendications 2 à 5, **caractérisé en ce que** qu'un levier (36, 38) est accouplé au bras oscillant long (31), l'unité d'accouplement (3) pour le câble de frein venant en prise sur celui-ci.

7. Frein de stationnement selon l'une quelconque des revendications 2 à 6, **caractérisé en ce que** le bras oscillant court (32) et le bras oscillant long (31) présentent dans la position rabattue, un angle l'un par rapport à l'autre qui permet le fléchissement en sortie vers le haut.

8. Frein de stationnement pour un véhicule, notamment selon la revendication 1, comprenant
une poignée (2) déplaçable par rapport à un support (6), la poignée (2) pouvant être déplacée axialement par le biais d'un dispositif de guidage (5, 7) par rapport au support (6),
une unité d'accouplement (3) qui tend un câble de frein (4) lors du déplacement de la poignée (2), et
un dispositif de stationnement (16, 17) destiné à maintenir le câble de frein (4) dans une position de stationnement, une unité de transmission (8) étant accouplée au support (6), laquelle convertit le déplacement axial d'une pièce associée à la poignée (2) en un actionnement du câble de frein (4),
**caractérisé en ce que**
l'unité de transmission (8) comprend au moins un segment d'une molette (11) pivotant vers l'avant sur le dispositif de guidage (5, 7),
**en ce que** l'unité d'accouplement (3) pour le câble de frein (4) est disposée sur la molette câble (11) et
**en ce qu'**un câble de traction (15) guidé sur la périphérie de la molette (11) relie la poignée (2) à l'unité de transmission (8).

9. Frein de stationnement selon la revendication 8, **caractérisé en ce que** le câble de traction (15) est fixé sur la molette (11).

10. Frein de stationnement selon la revendication 8 ou 9, **caractérisé en ce que** l'unité de transmission (3) peut pivoter dans une distance fixe autour d'un axe de pivotement de la molette (11).

11. Frein de stationnement selon l'une quelconque des revendications 8 à 10, **caractérisé en ce qu'**un corps de plaque (13) est accouplé à la molette(11), et **en ce que** l'unité d'accouplement (3) est prévue sur le corps de plaque (13).

12. Frein de stationnement selon l'une quelconque des revendications 8 à 11, **caractérisé en ce que** l'unité de transmission (8) est montée sur une pièce support (10) fixée à la carrosserie et **en ce que** la pièce support (10) est fixée sur le support (6).

13. Frein de stationnement selon la revendication 12, **caractérisé en ce que** la pièce support (10) présente une articulation (12) dans laquelle est montée au moins une portion de la molette câble (11).

14. Frein de stationnement selon la revendication 12 ou 13, **caractérisé en ce qu'**un bras oscillant est monté sur la poulie à câble (11) en dehors de l'articulation (12) sur la pièce support (10).

15. Frein de stationnement selon la revendication 14, **caractérisé en ce que** le bras oscillant s'applique avec une extrémité opposée à l'articulation à la molette (11) contre la pièce support (10).

16. Frein de stationnement selon la revendication 14 ou 15, **caractérisé en ce que** le bras oscillant présente une branche coudée à l'extrémité de laquelle est prévu l'accouplement (3) du câble de frein (4).

17. Frein de stationnement selon l'une quelconque des revendications 12 à 16, **caractérisé en ce que** l'unité d'accouplement (3) présente une distance à l'articulation (12) de la molette (11) sur la pièce support (10) plus petite que son rayon.

18. Frein de stationnement selon l'une quelconque des revendications 12 à 17, **caractérisé en ce que** la pièce support (10) présente une section transversale en forme de U avec deux branches ascensionnelles (10b, 10c) et **en ce que** la molette (11) est montée entre les deux branches (10b, 10c).

19. Frein de stationnement selon l'une quelconque des revendications 8 à 18, **caractérisé en ce que** le câble de traction (15) est disposé sur un montant (2a) parallèle à la poignée (2).

20. Frein de stationnement selon l'une quelconque des revendications 8 à 19, **caractérisé en ce que** l'on prévoit un dispositif de soutien (18) qui vient en prise d'une part (18b) en dehors de l'articulation (12) sur la molette (11) et d'autre part (18a) dans la région de la carrosserie.

21. Frein de stationnement selon l'une quelconque des revendications 1 à 20, **caractérisé en ce que** l'on associe à l'unité de transmission (8, 8') une poulie de renvoi (14) et **en ce que** le câble de frein (4) est guidé sur la périphérie de la poulie de renvoi (14) vers l'unité d'accouplement (3).

22. Frein de stationnement selon l'une quelconque des revendications 1 à 21, **caractérisé en ce qu'**au moins un tube (7) présente au moins sur une portion une fente et **en ce que** sur le tourillon (5) correspondant est prévue une portion d'articulation dépassant à travers la fente, l'unité de transmission (8, 8') venant en prise sur la portion d'articulation.

23. Frein de stationnement selon l'une quelconque des revendications 1 à 22, **caractérisé en ce que** le dispositif de guidage (5, 7) pour la poignée (2) présente un dispositif d'amortissement qui après le desserrage du dispositif de stationnement (16, 17) pour l'état de freinage permet à la poignée (2) de revenir doucement et lentement dans sa position de départ.

24. Frein de stationnement selon l'une quelconque des revendications 1 à 23, **caractérisé en ce que** le dispositif de stationnement comprend un cliquet (17) qui vient en prise dans un segment denté (16) du dispositif de stationnement.

25. Frein de stationnement selon la revendication 24, **caractérisé en ce que** l'on prévoit un ressort de cliquet (17a) pour la précontrainte du cliquet (17) dans la direction du segment denté (16).

26. Frein de stationnement selon l'une quelconque des revendications 1 à 25, **caractérisé en ce que** l'on prévoit un dispositif de déclenchement (18, 19) afin de libérer le dispositif de stationnement (16, 17).

27. Frein de stationnement selon l'une quelconque des revendications 1 à 26, **caractérisé par** une démultiplication de la poignée (2) par rapport au câble de frein (4) d'un facteur compris entre trois et quinze.

28. Frein de stationnement selon l'une quelconque des revendications 1 à 27, **caractérisé en ce que** l'unité d'accouplement (3) comprend un dispositif de réglage pour le câble de frein (4).

29. Frein de stationnement selon l'une quelconque des revendications 1 à 28, **caractérisé par** une configuration de la poignée sous forme de poignée à main pour un frein à main.

30. Frein de stationnement selon l'une quelconque des revendications 1 à 28, **caractérisé par** une configuration sous forme de frein de stationnement à pied.

31. Frein de stationnement selon l'une quelconque des revendications 1 à 30, **caractérisé par** un support motorisé pour tirer et/ou desserrer le frein de stationnement.
